# EUROPÄISCHE PATENTSCHRIFT

(11) **EP 2 739 869 B1**
(45) Veröffentlichungstag und Bekanntmachung des Hinweises auf die Patenterteilung: **09.09.2015**
(21) Anmeldenummer: 12735543.6
(22) Anmeldetag: 17.07.2012
(51) Int. Cl.: F16D 23/06

(54) **NABE ZUR DREHMOMENTÜBERTRAGUNG**
HUB FOR TORQUE TRANSMISSION
MOYEU POUR LA TRANSMISSION D'UN COUPLE

(30) Priorität: 05.08.2011 DE 102011080494
(43) Veröffentlichungstag der Anmeldung: 11.06.2014
(73) Patentinhaber: Schaeffler Technologies AG & Co. KG, 91074 Herzogenaurach (DE)
(72) Erfinder: NICOLAS QUECK, Alex, 90461 Nürnberg (DE); WALTHER, Volkhard, 91074 Herzogenaurach (DE); FOLK, Rudolf, 96152 Burghaslach (DE)
(86) Internationale Anmeldenummer: PCT/EP2012/063941
(87) Internationale Veröffentlichungsnummer: WO 2013/020780

(56) Entgegenhaltungen:
- EP-A1- 0 157 908
- EP-A2- 1 801 444
- DE-A1- 2 510 657
- DE-C- 956 284

## Beschreibung

### Gebiet der Erfindung

Die Erfindung betrifft eine Nabe mit einer Außenverzahnung zum Eingriff in eine Muffeninnenverzahnung und mit einer Zentralausnehmung zum Kontaktieren einer Welle, wobei die Außenverzahnung aus mehreren Verzahnuhgsabschnitten gebildet ist, die durch Verzahnungsfenster voneinander getrennt sind.

### Hintergrund der Erfindung

Derartige Naben sind der Fachwelt in den unterschiedlichsten Anwendungen, beispielsweise als Getriebezahnräder, bekannt. Die Verzahnungen der Naben weisen Verzahnungsabschnitte auf, in denen die Zähne äquidistant voneinander beabstandet sind. Daneben gibt es Bereiche, in denen die Verzahnung beispielsweise durch Ausnehmungen für Vorsynchronisationselemente unterbrochen ist oder einzelne Zähne breiter ausfallen, die in eine korrespondierende, breitere Zahnlücke in der Gegenverzahnung eingreifen, um die ineinander greifenden Bauteile korrekt zueinander zu positionieren.

Aus DE 38 17 767 A1 ist eine hülsenartige Schiebemuffe bekannt, die mit einer Innenverzahnung in die Außenverzahnung eines zylindrischen Synchronträgerkörpers eingreift. Um die durch Härteverzüge entstandene Kippneigung der Schiebemuffe zu reduzieren, ist der Zahndurchmesser der Verzahnung so angepasst, dass eine exakte Gleitführung der Schiebemuffe unter Einhaltung definierter Spiele gesichert ist.

DE 100 18 094 A1 offenbart eine Schiebemuffe mit einem spanlos hergestellten, wellenförmigen, eine Innenverzahnung aufweisenden Muffenkörper und Scheiben als Schaltgabelführungen. Die Scheiben greifen mit nach innen ragenden Keilen in den Muffenkörper ein. Dabei können die Profile des Muffenkörpers und der Scheiben mit gleicher oder abweichender Teilung ineinander greifen.

Dadurch dass die Naben häufig nicht rotationssymmetrisch sind, beispielsweise weil die Verzahnungen nicht voll umlaufen, sondern in Verzahnungssegmente gegliedert sind oder aus andren funktionellen Gründen, wirken auf die einzelnen Zähne unterschiedliche Kräfte. Insbesondere diejenigen Zähne einer Verzahnung, die Zahnfenstern benachbart sind, erfahren eine starke Zahnkraftüberhöhung, während die übrigen Zähne deutlich weniger Last übertragen. Verstärkt wird dieser Effekt dadurch, dass die Verzahnung der Naben durch die Montage auf der Welle leicht deformiert wird, insbesondere wenn die Nabe mittels einer Presspassung fest mit der Welle verbunden ist. Das Deformationsverhalten ist desto stärker ausgeprägt, je unrunder die Nabe ist oder je tiefer sich Radialausnehmungen von der Außenverzahnung zur Nabenmitte erstrecken. Dadurch werden insbesondere die Zähne, die den Radialausnehmungen benachbart sind, stark belastet.

In der Nabe entstehen somit unerwünschte Spannungsspitzen, die zum Ausfall führen können und einer weiteren Massereduzierung der Nabe entgegenstehen. Bei Naben mit Zahnfenstern sind insbesondere der erste und letzte Zahn eines Verzahnungssegments kritisch belastet, da die auf sie wirkenden Zahnkräfte die Kerbspannungen im Zahnfenster und damit des ganzen Bauteils besonders stark bestimmen.

Zur Lösung dieses Problems sind bei diversen Konstruktionen z.B in der DE 956 284 C der erste und letzte Zahn eines Segments durch Dickenreduzierung komplett außer Eingriff genommen, wodurch der Belastungseintrag in das Gegenbauteil etwas vom Zahnfenster weggerückt wird. Die Problematik der ungleichmäßigen Lastverteilung zwischen den Zähnen bleibt jedoch dabei im Grundsatz bestehen und verschiebt sich nur um einen Zahn. Außerdem stehen weniger tragende Zähne zur Drehmomentübertragung zur Verfügung.

### Aufgabe der Erfindung

Aufgabe der Erfindung ist es daher, eine Nabe für eine Welle zu schaffen, die bei gleichem Bauraum ein höheres Drehmoment übertragen kann oder deren Lebensdauer gesteigert ist.

### Lösung der Aufgabe

Erfindungsgemäß wird diese Aufgabe bei einer Nabe nach dem Oberbegriff des Anspruchs 1 dadurch gelöst, dass die nicht auf der Welle verbaute Nabe einen Teilungsfehler aufweist, der von den Verzahnungsfenstern weg gerichtet abnimmt. Die einzelnen Zähne sind damit nicht geometrisch voneinander gleich beabstandet, sondern sind zu dem Verzahnungsfenster hin zunehmend versetzt von der geometrischen Idealteilung ausgebildet. Der Teilungsfehler ist so dimensioniert, dass die Nabe, nachdem sie mit der Welle, insbesondere durch einen Pressverband, verbunden ist, keinen oder einen geringeren Teilungsfehler aufweist. Damit wird der Verzug, der sich aus der in Tangentialrichtung ungleichmäßigen Struktur aufgrund der Montage ergibt, konstruktiv bei der Herstellung der Verzahnung berücksichtigt. Die durch die Übermaßpassung in die Nabe eingeleiteten und diese deformierenden Kräfte werden damit nicht eliminiert, sondern zur Beseitigung des vorher künstlich eingebrachten Teilungsfehlers genutzt. Zusätzlich kann die Nabe unrund gefertigt werden, um durch die Presspassung einen kreiszylindrischen Umfang auf Höhe der Zahnfüße zu erhalten.

Die mittels an sich bekannter Finite-Elemente-Methoden berechnete Abweichungen der Zahnanordnung und/oder -ausdehnung einzelnen Zähne voneinander durch Asymmetrien, Anordnungsversatz oder Zahnprofilvariation, im folgenden Teilungsfehler genannt, wird somit gezielt dazu eingesetzt, um den infolge des Verbindens der Nabe mit der Welle erzeugten Verformungen entgegenzuwirken. Der künstlich eingebrachte Teilungsfehler wird durch die Verformung der Nabe bei ihrer Montage vermindert, so dass die Nabe im verbauten Zustand eine Verzahnung ohne nennenswerten Teilungsfehler aufweist. Der Teilungsfehler ist daher desto stärker ausgeprägt, je stärkster die Zahnbereichte der Nabe durch die Montage verformt werdne. Durch die Einführung des künstlichen, speziell angepassten Teilungsfehlers bei ansonsten gleicher Bauart der Nabe wird die Momentenübertragungssicherheit gesteigert.

Die Erfindung wird im folgenden anhand einer Synchronisiereinheit beschrieben. Sie ist genauso auf andere Getriebeanwendungen wie auch ganz allgemein auf Welle-Naben-Verbindungen anwendbar. Bei der Synchronisiereinheit ist der Synchronträgerkörper als Nabe mit dem künstlichen Teilungsfehler versehen.

Der Teilungsfehler betrifft vorzugsweise nicht nur einen einzelnen Zahn, sondern mindestens zwei benachbarte oder auch alle benachbarten Zähne. Ist das Funktionselement als eine Ausnehmung bzw. als ein Zahnfenster ausgebildet, sind die zu entlastenden Bereiche meistens die direkt an die Ausnehmung angrenzenden Zähne.

In einer Variante ist vorgesehen, jeden oder fast jeden Zahn mit einem Teilungsfehler zu versehen, so dass der Zahn, der am stärksten belastet ist, nur unwesentlich stärker als der am wenigsten belastete Zahn belastet ist. Idealerweise werden die Belastungsunterschiede durch den Teilungsfehler um mindestens 80% gemindert. In der Regel wird die Berechnung des Teilungsfehlers daher zu einer Verzahnung führen, die im Betrieb der Synchronisiereinheit eine weitgehend gleichmäßige Kraftverteilung auf alle Zähne sicherstellt.

Alternativ ist auch denkbar, in Bezug auf die Verzahnung gezielt ungleichmäßige Kraftverteilung einzubringen, die aber zu besonders niedrigen Spannungen in den mit der Verzahnung verbundenen oder zusammenwirkenden Bauteilen führt. Dadurch kann die Synchronisiereinheit mit weniger Material ausgelegt werden, was zu einem Gewichtsvorteil und einem Bauraumvorteil führt.

In Versuchen hat sich herausgestellt, dass die Spannungen in erfindungsgemäßen Synchronträgerkörpern um bis zu 30% zurückgehen. Dies erlaubt es gegebenenfalls sogar, einen Synchronträgerkörper in der Synchronisiereinheit zu verwenden, der allein aus Blechmaterial aufgebaut ist, womit erhebliche Material- und Gewichtseinsparungen gegenüber massiven Synchronträgerkörpern einhergehen.

Bei der Auslegung des Teilungsfehlers kann je nach Art der verwendeten Bauteile entweder auf die Optimierung der gesamten Synchronisiereinheit abgestellt werden. Alternativ sind einzelne Bauteile bzw. Bereiche gezielt etwas höher belastet, um andere so entlasten, dass ein zusätzlicher Vorteil in der Herstellung, z.B. durch Einsparen von Fertigungsschritten, Material oder Ermöglichen alternativer Fertigungsverfahren, erwächst.

Das Einstellen des künstlichen Teilungsfehlers kann durch Änderung der Dicke der Zähne, durch unterschiedliche Zahnprofile und/oder durch die Anordnung der Zähne in der Verzahnung erfolgen. Die Verzahnungen sind somit nicht geometrisch ideal realisiert, sondern die einzelnen Zähne sind dicker oder dünner ausgeführt, weisen unterschiedliche Querschnitte oder Profile auf oder sind bezüglich der geometrisch idealen Position leicht versetzt. Der Teilungsfehler kann sich selbstverständlich auch aus einer Kombination dieser Maßnahmen zusammensetzen.

Durch die sich im Betrieb einstellende optimierte Zahnkraftverteilung werden die Verzahnung und ihre Gegenverzahnung sowie die sie tragenden Bauteile deutlich niedriger beansprucht. Es hat sich herausgestellt, dass der Teilungsfehler bei Getriebesynchronisationen für Personenkraftwagen im Bereich von einigen Mikrometern bis maximal wenigen hundertstel Millimetern liegt. Er ist in jedem Fall um eine oder mehrere Größenordnungen kleiner als die Abmessungen der Zähne selbst.

Um die Herstellungskosten durch Nachbearbeitung oder zu hohe Anforderungen an die Fertigungsgenauigkeit in einem vertretbaren Rahmen zu halten, sollte der minimale Teilungsfehler eine herstellungstechnologiebedingte untere Grenze nicht unterschreiten. Bei der Berechnung des Teilungsfehlers für die übrigen Zähne sollte diese untere Grenze berücksichtigt werden.

Prinzipiell ist die Einstellung des Teilungsfehlers auf der Verzahnung eines Synchronisierbauteils ausreichend. Es können aber auch sowohl die Verzahnung als auch ihre Gegenverzahnung Teilungsfehler enthalten.

Ist das erste Synchronisierbauteil ein Synchronträgerkörper und das zweite Synchronisierbauteil eine Schiebemuffe, so ist es vorteilhaft, den Teilungsfehler in der Verzahnung des Synchronträgerkörpers vorzusehen, wenn der Zahneingriff der Schiebemuffe zum Kupplungskörper nicht beeinflusst werden soll.

Die Herstellung des Teilungsfehlers innerhalb einer Verzahnung kann auf einfache Weise dadurch erfolgen, dass, insbesondere bei kaltumformtechnisch hergestellten Verzahnungen, das Fertigungswerkzeug mit der verstemmten Zahngeometrie versehen ist.

Die erfindungsgemäße Verzahnung kann mit einem zweiten, Teilungsfehler versehen werden. Während der zuvor genannte, erfindungsgemäße (erste) Teilungsfehler eine lediglich von der geometrischen Position abweichende Anordnung der Zähne vorsieht, kann als zweiter Teilungsfehler eine Flankenrücknahme oder weitere geometrische Versetzung vorgesehen sein, die von der auf die Nabe eingebrachte Last und/oder Drehrichtung abhängig ist. Dieser zweite Teilungsfehler führt zu einem verstimmten Zahneingriff, d.h. die Zähne stehen nicht bei jeder Belastung alle gleichzeitig im Eingriff, sondern infolge der erforderlichen elastischen Verformung erst bei einer bestimmten Lastverteilung, die einen vorgegebenen, durch die Art und Größe des Teilungsfehlers einstellbaren Schwellwert überschreitet. Wird die Last auf die die geringen Drehmomente übertragenden Zähne zu groß, verformen sie sich leicht, so dass mehr Zähne zum Tragen kommen. Bei zunehmender Belastung werden daher sukzessive mehr Zähne an der Drehmomentübertragung beteiligt, bis bei maximalem Drehmomenteintrag alle Zähne zur Drehmomentübertragung beitragen. Damit ergibt sich eine belastungsabhängige Lastverteilung. Im Ergebnis führt dies dazu, dass einzelne Zähne zwar bei bestimmten oder allen Betriebsbedingungen höher belastet sind als die Zähne einer geometrisch idealen Verzahnung; die Spitzenbelastung der unter den ungünstigst möglichen Betriebsbedingungen am stärksten beanspruchten Zähne bzw. Verzahnungsabschnitte der Synchronisierbauteile nimmt jedoch ab. Da die Synchronisiereinheit auf diese Spitzenbelastung auszulegen ist, erhöht sich durch den gezielten zweiten Teilungsfehler die Lebensdauer bzw. das übertragbare Drehmoment zusätzlich.

Eine Nabe mit den vorstehend genannten zwei Teilungsfehlern erreicht die geometrisch ideale Verzahnung daher noch nicht unittelbar nach der Montage auf der Welle, sondern erst unter Belastung im Betrieb der Vorrichtung mit der Nabe.

### Kurze Beschreibung der Zeichnung

Die Erfindung ist zweckmäßigerweise anhand von Zeichnungen näher erläutert. Es zeigen:
- Figur 1: einen Querschnitt einer erfindungsgemäßen Nabe in Form eines Synchronträgerkörpers mit einer Schiebemuffe als Bauteil mit der Gegenverzahnung,
- Figur 2: eine perspektivische Darstellung der Synchronisiereinheit aus Figur 1,
- Figur 3: einen Teilausschnitt eines Querschnitts einer zweiten erfindungsgemäßen Nabe mit einer projezierten geometrischen Idealverzahnung,
- Figur 4a: eine Grafik über den Teilungsfehler des Verzahnungsabschnitts einer Nabe nach dem Stand der Technik vor der Montage,
- Figur 4b: die aus der Zahngeometrie nach Figur 4a resultierenden Teilungsfehler der einzelnen Zähne nach der Montage der Nabe auf eine Welle,
- Figur 5a: die Teilungsfehler der Zähne des Verzahnungsabschnitts der erfindungsgemäßen Nabe nach Figur 3 vor der Montage und
- Figur 5b: die Teilungsfehler der Zähne des Verzahnungsabschnitts der erfindungsgemäßen Nabe nach Figur 3 nach der Montage.

### Ausführliche Beschreibung der Zeichnungen

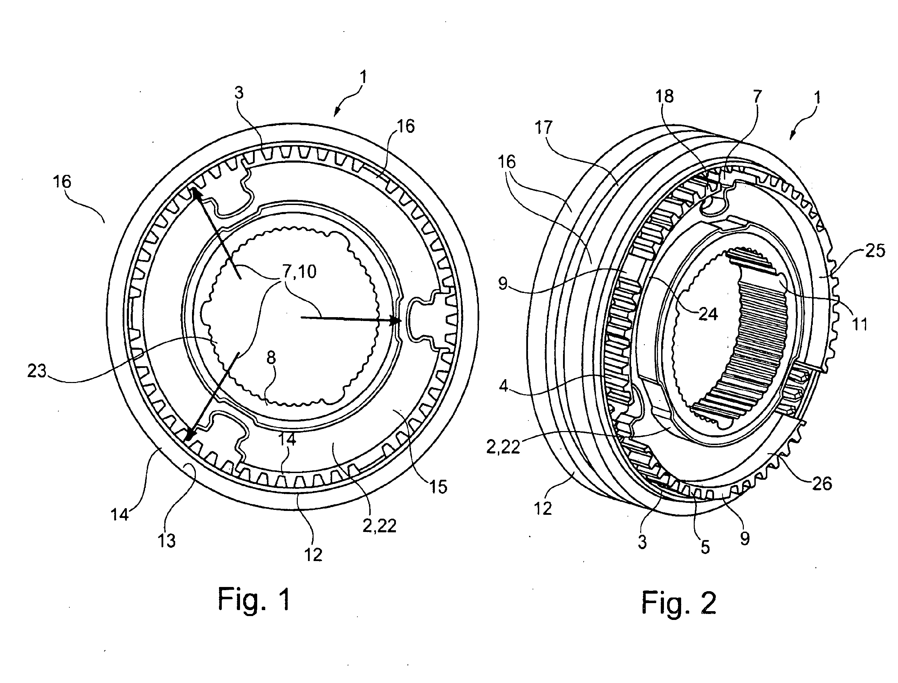

Die Figuren 1 und 2 zeigen eine erfindungsgemäße Nabe 22 als Synchronträgerkörper 2 einer Synchronisiereinheit 1. Die Nabe 22 weist an ihrer nach außen gerichteter Oberfläche 3 eine Außenverzahnung 4 auf. Konzentrisch zur Außenverzahnung 4 weist die Nabe eine Zentralausnehmung 23 auf, über die sie drehfest befestigbar ist. Zu diesem Zweck weist die Nabe 22 in der Zentralausnehmung 23 eine Wellenverzahnung 8 auf, mit der sie in eine Gegenverzahnung einer nicht dargestellten Getriebewelle eingreifen kann.

Mit der Außenverzahnung 4 greift die als Synchronträgerkörper 2 ausgebildete Nabe 22 in eine komplementäre innere Verzahnung 14, die an der nach innen gerichteten Oberfläche 13 einer den Synchronträgerkörper 2 konzentrisch umschließenden Schiebemuffe 12 als zweitem Bauteil angeordnet ist. Die Schiebemuffe 12 weist außenseitig eine durch Ringbandagen 16 gebildete Schaltgabelnut 17 für den Eingriff einer die Synchronisiereinheit 1 betätigenden, nicht dargestellten Schaltgabel auf. Der Synchronträgerkörper 2 und die Schiebemuffe 12 sind über ihre sich in Axialrichtung erstreckenden Verzahnungen 4, 14 formschlüssig verbunden und axial zueinander verschiebbar.

Der Synchronträgerkörper 2 ist kein rotationssymmetrisches Bauteil. Vielmehr ist die Außenverzahnung 4 des Synchronträgerkörpers 2 umfangsseitig durch drei Verzahnungsfenster 10 in Form von Aussparungen 7 für Arretierungen in drei Verzahnungsabschnitte 24, 25, 26 gegliedert, die endseitig jeweils einen Arretierfensterzahn 18 aufweisen. Die Arretierungen (nicht dargestellt) dienen zur Einleitung des Vorsynchronisationsprozesses. Die Verzahnungsabschnitte 24, 25, 26 weisen einen Positionierzahn 9 auf, der erheblich breiter als die übrigen Zähne 5 ausgebildet ist. Mittels des Positionierzahns 9 wird bei der Montage die korrekte Winkelpositionierung der beiden Bauteile Schiebemuffe 12 und Synchronträgerkörper 2 sichergestellt. Weiterhin sind an der Wellenverzahnung 8 Ausnehmungen 11 angeordnet.

Die Zähne 5 des Synchronträgerkörpers 2 weisen eine auf ihre Belastung abgestimmte, beispielsweise in der Mitte zwischen Zahndach und Zahnfuß gemessene, individuelle Zahndicke dᵢ und somit einen Teilungsfehler auf. Die Zähne 15 der Schiebemuffe 12 sind äquidistant angeordnet und weisen eine gleichbleibende Zahnstärke auf.

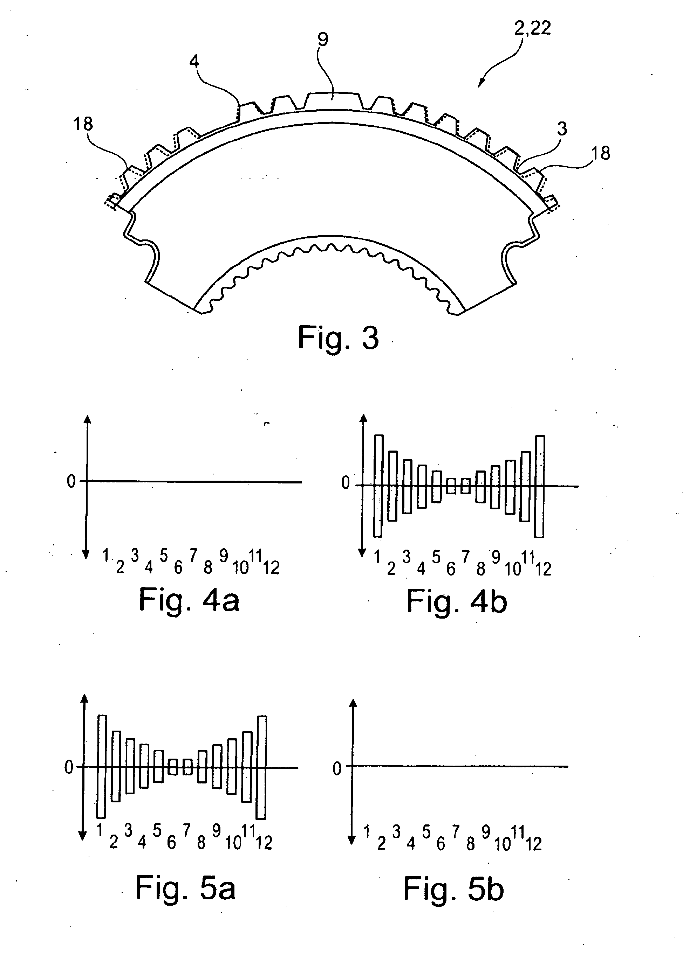

Die Zähne 5 des Synchronträgerkörpers 2 weisen in dieser Ausführungsform alle im Wesentlichen die gleiche (Evolventen-)Grundform auf. Zum besseren Vergleich ist in Figur 3 auf die Zähne 5 mit dem Teilungsfehler eine Verzahnung projiziert, wie sie bei geometrisch gleichem Abstand der Zähne sich ergäbe. Der Teilungsfehler nimmt zu den Arretierfensterzähnen 18 ausgehend vom Positionierzahn 9 monoton zu.

Die Figuren 4a und 4b beziehen sich auf eine Synchronisiereinheit des Standes der Technik. In Figur 4a ist für jeden Zahn des Synchronträgerkörpers 2 vor seiner Montage auf die Welle die Abweichung der jeweiligen Zahnanordnung von der Position, die bei geometrischer Gleichteilung des Verzahnungsabschnitts durch die 12 Zähne sich ergäbe, dargestellt. Aufgrund der gleichen Ausbildung und Beabstandung aller benachbarten Zähne ist die Abweichung null bzw. liegt unterhalb des fertigungstechnisch beeinflussbaren Bereichs. Einem derartigen Verzahnungsabschnitt sind die in Figur 4b dargestellten Repositionierungen nach dem Verpressen des Synchronträgerkörpers 2 zugeordnet. Die außenseitig gelegenen Arretierfensterzähne (erster und zwölfter Zahn) sind am stärksten aus ihrer geometrischen Idealposition entrückt.

Die Figuren 5a und 5b zeigen die Verhältnisse bei einer erfindungsgemäßen Synchronisiereinheit aus den Figuren 1 bis 3. Hiersind die Verhältnisse nahezu umgekehrt: Vor der Montage sind die Arretierfensterzähne am weitesten aus ihrer geometrischen Idealposition gefertigt, während nach der Montage (Figur 5b) sich eine Gleichteilung ergibt.

### Liste der Bezugszahlen

1) Synchronisiereinheit
2) Synchronträgerkörper
3) nach außen gerichtete Oberfläche
4) äußere Verzahnung
5) Zahn
6) (nicht belegt)
7) Aussparung
8) Wellenverzahnung
9) Positionierzahn
10)Funktionselement
11)Ausnehmung
12)Schiebemuffe
13)nach innen gerichtete Oberfläche
14)innere Verzahnung
15)Zahn
16)Ringbandage
17)Schaltgabelnut
18)Arretierfensterzahn
19)Spalt
20)Flankenreduzierung
21)Zahnflanke
22)Nabe
23)Zentralausnehmung
24)Verzahnungsabschnitt
25)Verzahnungsabschnitt
26)Verzahnungsabschnitt

## Patentansprüche

1. Nabe (2, 22) mit einer Außenverzahnung (4) zum Eingriff in eine Muffeninnenverzahnung und mit einer Zentralausnehmung (23) zum Kontaktieren einer Welle, wobei
- die Außenverzahnung (4) aus mehreren Verzahnungsabschnitten (24, 25, 26) gebildet ist, die durch Verzahnungsfenster (10) voneinander getrennt sind,
**dadurch gekennzeichnet, dass** die nicht auf der Welle verbaute Nabe (2, 22) einen geometrischen Teilungsfehler aufweist, der von den Verzahnungsfenstern (10) weg gerichtet abnimmt.

2. Nabe nach Anspruch 1, **dadurch gekennzeichnet, dass** die Außenverzahnung (4) eine Geradverzahnung ist.

3. Nabe nach Anspruch 1, **dadurch gekennzeichnet, dass** die Nabe (22) ein Synchronkörper (2) für eine Synchronisiereinrichtung (1) ist.

4. Nabe nach Anspruch 1, **dadurch gekennzeichnet, dass** die die Verzahnungsfenster (10) als mindestens zwei Zahn breite Radialausnehmungen ausgebildet sind.

5. Nabe nach Anspruch 1, **dadurch gekennzeichnet, dass** der maximale Teilungsfehler kleiner als 100 Mikrometer ist.

6. Nabe nach einem der Ansprüche 1-5, **dadurch gekennzeichnet, dass** die Außenverzahnung (4) der Nabe (2, 22) einen weiteren Teilungsfehler aufweist, um die durch das Verzahnungsfenster (10) bzw. die Geometrie der Bauteile (2, 12) erzeugten, unterschiedlichen momenteninduzierten Belastungen zu vergleichmäßigen.

7. Nabe nach Anspruch 6, **dadurch gekennzeichnet, dass** der weitere Teilungsfehler als eine Dickenreduzierung (8) oder Flankenrücknahme bestimmter Zähne ausgebildet ist.

8. Baueinheit mit einer Welle und einer Nabe (2, 22) nach einem der vorhergehenden Ansprüche, **dadurch gekennzeichnet, dass** die Nabe (2, 22) auf der Welle mit Übermaßpassung verpresst ist.

9. Baueinheit nach Anspruch 8, **dadurch gekennzeichnet, dass** die Nabe (2, 22) nach der Montage auf der Welle lastfrei oder unter Last eine nahezu äquidistante Zahnteilung aufweist.

## Claims

1. Hub (2, 22) having an external toothing (4) for engagement into an internal toothing of a sleeve, and having a central recess (23) for making contact with a shaft, wherein
- the external toothing (4) is formed from multiple toothing sections (24, 25, 26) which are separated from one another by toothing windows (10),
**characterized in that** the hub (2, 22), when not installed on the shaft, has a geometric pitch error which decreases in the direction away from the toothing windows (10).

2. Hub according to Claim 1, **characterized in that** the external toothing (4) is a straight toothing.

3. Hub according to Claim 1, **characterized in that** the hub (22) is a synchronizing body (2) for a synchronizing device (1).

4. Hub according to Claim 1, **characterized in that** the toothing windows (10) are in the form of radial recesses with a width equal to that of at least two teeth.

5. Hub according to Claim 1, **characterized in that** the maximum pitch error is less than 100 micrometers.

6. Hub according to one of Claims 1-5, **characterized in that** the external toothing (4) of the hub (2, 22) has a further pitch error in order to smooth the varying torque-induced loads generated by the toothing window (10) and/or by the geometry of the components (2, 12).

7. Hub according to Claim 6, **characterized in that** the further pitch error is in the form of a reduction in thickness (8) or flank taper of particular teeth.

8. Structural unit having a shaft and having a hub (2, 22) according to one of the preceding claims, **characterized in that** the hub (2, 22) is pressed onto the shaft with an interference fit.

9. Structural unit according to Claim 8, **characterized in that** the hub (2, 22), after being mounted on the shaft, has a virtually equidistant tooth pitch when free from load or when under load.

## Revendications

1. Moyeu (2, 22) présentant une denture extérieure (4) destinée à s'engrener dans une denture intérieure de manchon et présentant un évidement central (23) destiné à entrer en contact avec un arbre,
- la denture extérieure (4) étant formée à partir de plusieurs portions de denture (24, 25, 26) qui sont séparées les unes des autres par des fenêtres de denture (10),
**caractérisé en ce que** le moyeu (2, 22) non monté sur l'arbre présente une erreur de pas géométrique qui diminue lorsque l'on s'éloigne des fenêtres de denture (10).

2. Moyeu selon la revendication 1, **caractérisé en ce que** la denture extérieure (4) est une denture droite.

3. Moyeu selon la revendication 1, **caractérisé en ce que** le moyeu (22) est un corps de synchronisation (2) pour un dispositif de synchronisation (1).

4. Moyeu selon la revendication 1, **caractérisé en ce que** les fenêtres de denture (10) sont réalisées sous forme d'évidements radiaux d'au moins deux dents de largeur.

5. Moyeu selon la revendication 1, **caractérisé en ce que** l'erreur de pas maximale est inférieure à 100 micromètres.

6. Moyeu selon l'une quelconque des revendications 1 à 5, **caractérisé en ce que** la denture extérieure (4) du moyeu (2, 22) présente une erreur de pas supplémentaire, afin d'uniformiser les différentes sollicitations induites par un couple générées par la fenêtre de denture (10) ou la géométrie des composants (2, 12).

7. Moyeu selon la revendication 6, **caractérisé en ce que** l'erreur de pas supplémentaire est réalisée en tant que réduction d'épaisseur (8) ou dépouille de flanc de dents déterminées.

8. Unité structurale comprenant un arbre et un moyeu (2, 22) selon l'une quelconque des revendications précédentes, **caractérisée en ce que** le moyeu (2, 22) est pressé sur l'arbre avec ajustement serré.

9. Unité structurale selon la revendication 8, **caractérisée en ce qu'**après le montage sur l'arbre, le moyeu (2, 22) présente un pas de dents pratiquement équidistant sans charge ou sous charge.
